# EUROPEAN PATENT SPECIFICATION

(11) **EP 1 832 980 B1**
(45) Date of publication and mention of the grant of the patent: **25.04.2012**
(21) Application number: 05809751.0
(22) Date of filing: 21.11.2005
(51) Int. Cl.: G06F 9/52, G06F 13/42

(54) **MULTIPROCESSOR SYSTEM AND EXCLUSIVE CONTROL METHOD THEREIN**
MULTIPROZESSORSYSTEM UND VERFAHREN ZU DESSEN EXKLUSIVER KONTROLLE
SYSTEME MULTIPROCESSEUR ET PROCEDE DE CONTROLE EXCLUSIF

(30) Priority: 26.11.2004 JP 2004341466
(43) Date of publication of application: 12.09.2007
(73) Proprietor: International Business Machines Corporation, Armonk, NY 10504 (US)
(72) Inventor: UEDA, Makoto Yasu site, IBM Japan Ltd., Shiga 520-2362 (JP)
(74) Representative: Williams, Julian David
(86) International application number: PCT/JP2005/021336
(87) International publication number: WO 2006/057208

(56) References cited:
- JP-A- 01 286 070
- JP-B2- 3 381 733
- JP-B2- 06 080 497
- JP-B2- 07 113 909
- US-A- 5 669 002
- US-A1- 2002 016 879
- US-A1- 2003 126 381

## Description

### Field of the invention

The present invention relates to a multiprocessor system and an exclusive control therefor. More particularly, the present invention relates to a multiprocessor system that obtains a lock before exercising exclusive control and releases the lock after exercising the exclusive control.

### Background art

Conventionally, a cache coherency protocol such as MESI (Modified, Exclusive, Shared, Invalid) and a bus for supporting indivisible (atomic) transfers are required as an environment for the execution of multi-thread programming. However, CPUs (Central Processing Units) and buses are expensive, as is mounting them.

At present, because of the need to support Linux, TLBs (Translation Look-aside Buffers) are even mounted on less expensive CPUs. When such CPUs are used, a multiprocessor system can be constructed so long as buses supporting atomic transfers are mounted. In this case, even without hardware support for bus snooping, by using the same OS (Operating System) as for NUMA (Non-Uniform Memory Access), with TLB support, cache coherency can be maintained.

Buses that support atomic transfers are required because such buses support the exercise of exclusive control by CPUs. For example, in order to exclusively rewrite TLBs provided for individual CPUs, an atomic read-modify-write function that employs a lock variable is required. However, an inexpensive installed processor, designed as a uniprocessor, and the provision of the bus of this processor will not support the atomic read-modify-write function.

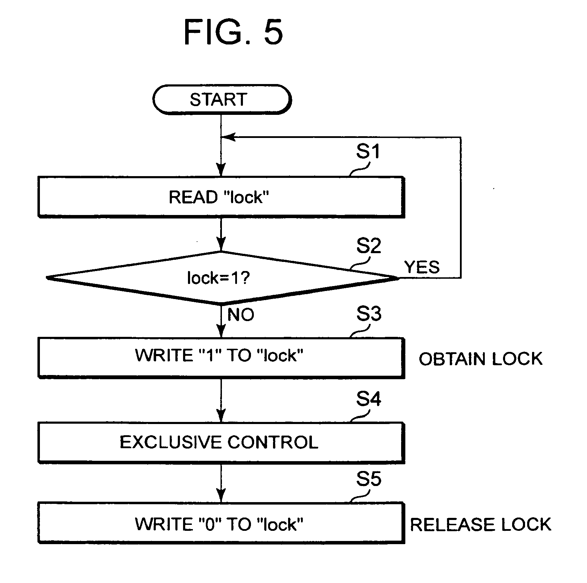

The need for the atomic read-modify-write function will now be explained while referring to Fig. 5. In this example, a lock variable "lock" is allocated in a memory.

First, a CPU reads the lock variable "lock" from the memory (S1), and determines whether lock = 1 or not (S2). When lock = 1, i.e., so long as the lock variable is in the locked state (YES at S2), the CPU repetitively reads the lock variable "lock" (S1). When lock = 0, i.e., when the lock variable is in the unlocked state (NO at S2), the CPU rewrites the lock variable to lock = 1, and obtains the lock required for the exercise of exclusive control (S3). After obtaining the lock, the CPU can then exercise predetermined exclusive control (S4). Then, once the exercise of exclusive control is no longer required, the CPU releases the lock by rewriting the lock variable to lock = 0 (S5).

However, should another CPU read lock = 0 during a period extending from the time lock = 0 was first read until lock = 1 is rewritten, that CPU may erroneously determine that a lock can be obtained. In order to prevent this, the lock variable reading process S 1 and the writing process S3 must be atomically performed.

Furthermore, since the program that permits the CPU to execute the atomic read-modify-write function employs a special command required for an atomic transfer, the program must not be written in a high-level language like C, but in assembly language.

An apparatus in which an atomic transfer is supported by a CPU and a local bus is disclosed by the specification for USP 5,175,829. A multiprocessor of this type adopts a common bus system to reduce bus bandwidth, and employs the MESI protocol to prevent a CPU that can not obtain a lock from unnecessarily repeating read accesses.

An apparatus wherein a swap register for managing a lock is incorporated in a CPU is disclosed in the specification for USP 5,535,365. This apparatus occasionally updates a lock variable stored in the swap register by exchanging it with a lock variable stored in memory, and issues a read access to the swap register to obtain a lock. This apparatus is provided on the assumption that the expensive and complicated atomic read-modify-write function is present.

An apparatus that obtains a lock by sending a retry signal and that reduces the saturation of bus bandwidth is disclosed in the specification for USP 5,666,515. This apparatus is also provided on the assumption that the expensive and complicated atomic read-modify-write function is present.

US 2003/0126381 A1 (Vo, Hahn) 3 July 2003, discloses a multiprocessor system for obtaining a lock.

### Summary of the Invention

It is an object of the present invention to provide a multiprocessor system capable of achieving a function equivalent to an expensive system having an atomic read-modify-write function of a lock variable with a simple configuration.

The present invention provides a multiprocessor system as claimed in claim 1.

In the above multiprocessor system, if a certain processor asserts the read signal, the first lock variable is read from the lock register and the first lock variable in the locked state is written into the lock register. If the read first lock variable is unlocked, the processor can obtain the lock. The locked first lock variable is written into the lock register together with the readout of the first lock variable. Therefore, even if another processor asserts the read signal immediately thereafter, it cannot obtain the lock since the locked first lock variable is read from the lock register. Thus, the multiprocessor system according to the present invention is capable of achieving the function equivalent to an expensive system having an atomic read-modify-write function of a lock variable only with a provision of the lock register.

Preferably, the lock register further includes bus retry means. When one of the processors asserts a read signal while the first lock variable is in the locked state, the bus retry means generates a bus retry signal to be supplied to the processor.

In this case, since the processors receive the bus retry signal and understand that acquisition of a lock is disabled, the processors do not assert unnecessary read signals.

The multiprocessor further comprises: a first bus, a memory and a second bus. The first bus is connected in common to the plurality of processors, the memory is connected to the first bus, and the second bus is connected in common to the plurality of processors. The lock register is connected to the second bus.

In this case, when a specified processor is awaiting the release of a lock because another processor has obtained the lock, the specified processor asserts a read signal through the second bus and reads the first lock variable from the lock register, while the processor that has obtained the lock accesses the memory via the first bus. Therefore, the memory access by the processor that has obtained the lock is not interrupted.

Further, it is preferable that one, or equal to or greater than two lock variables be stored in the memory. Each processor asserts a read signal, reads the first lock variable from the lock register, reads the second lock variable from the memory when the first lock variable is in the unlocked state, and rewrites the second lock variable to locked state when the second lock variable is in the unlocked state.

In this case, first, the processors, read the first lock variable from the lock register and obtain a lock, and then, read the second lock variable from the memory and obtain a lock. Since the processors obtain a lock step by step, multiple lock variables can be designated.

### Brief Description of the Drawings

Fig. 1 is a functional block diagram showing the general configuration of a multiprocessor system according to one embodiment of the present invention.
Fig. 2 is a circuit diagram showing the arrangement of a lock register in Fig. 1.
Fig. 3 is a timing chart showing the operation of the lock register in Fig. 2.
Fig. 4 is a flowchart showing the lock acquisition operation performed by the multiprocessor system in Fig. 1.
Fig. 5 is a flowchart showing the lock acquisition operation performed by a conventional multiprocessor.

### Preferred embodiment of the invention

The preferred embodiment of the present invention will now be described in detail while referring to the drawings. The same reference numerals are employed for corresponding or identical sections in the drawings, and an explanation for them will not be repeated.

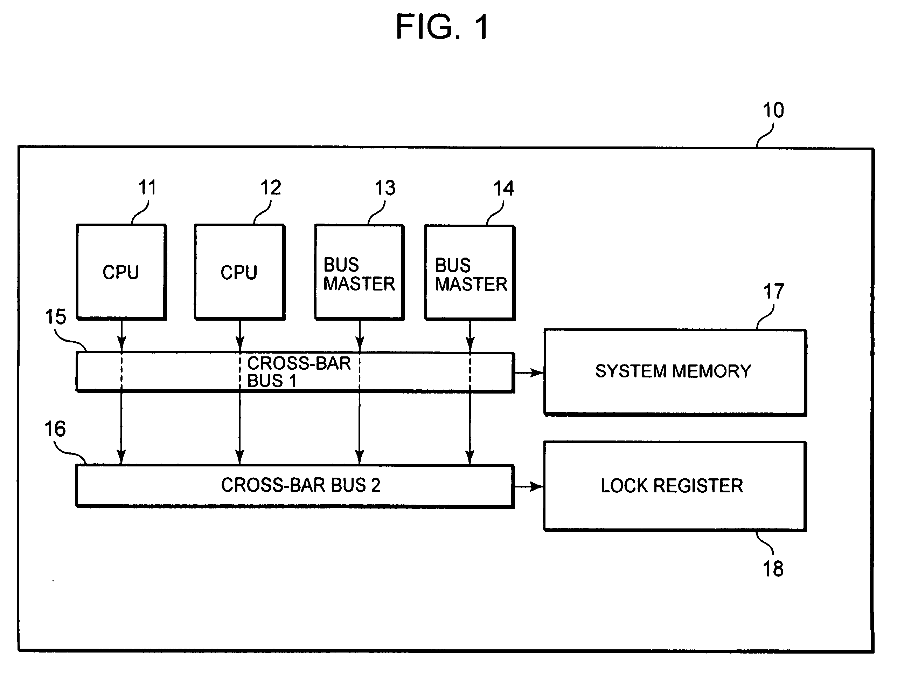

In Fig. 1, a multiprocessor system 10 according to this embodiment includes CPUs11 and 12, bus masters 13 and 14, cross-bar buses 15 and 16, a system memory 17 and a lock register 18.

The CPUs 11 and 12 and the bus masters 13 and 14 are connected in common to the cross-bar bus 15, and are also connected in common to the other cross-bar bus 16. The system memory 17 is connected to the cross-bar bus 15, and the lock register 18 is connected to the cross-bar bus 16. The CPUs 11 and 12 can access the system memory 17 via the cross-bar bus 15, and can access the lock register 18 via the cross-bar bus 16. The bus masters 13 and 14 can access the system memory 17 via the cross-bar bus 15, and can access the lock register 18 via the cross-bar bus 16.

The lock register 18 is a register for managing a lock required for exclusive control. Before exercising exclusive control, the CPU 11 or 12 asserts a read signal and obtains a lock, and once the exercise of exclusive control is no longer required, asserts a write signal and releases the lock. The lock register 18 is mapped on the memory, and an address is allocated differing from that for the system memory 17.

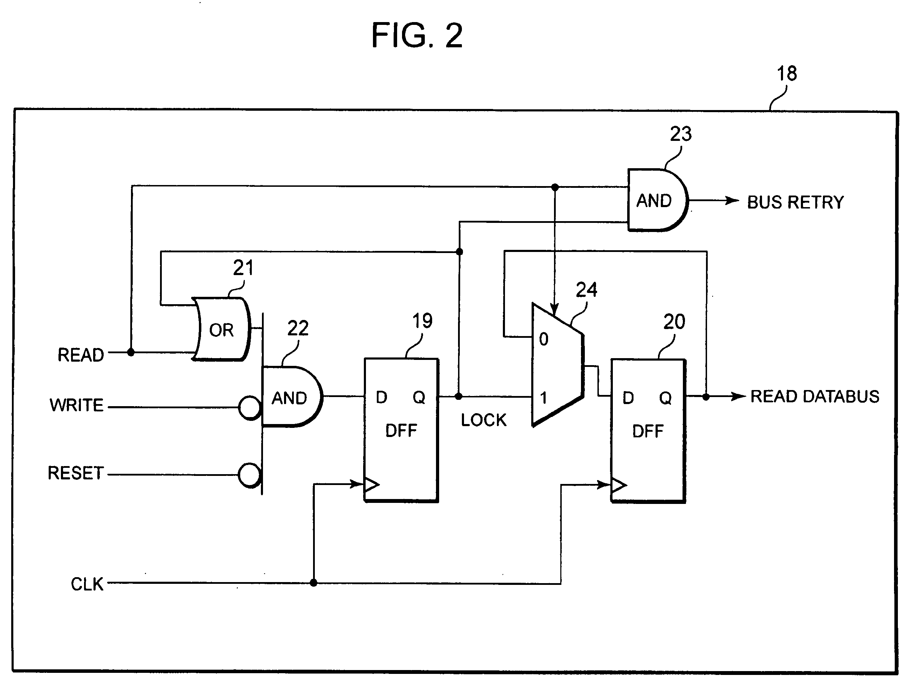

In Fig. 2, the lock register 18 accepts a read signal READ and a write signal WRITE from the CPU 11 or 12, and outputs a read data bus signal READ data bus and a bus retry signal BUS Retry. The lock register 18 includes delay flip-flops (DFFs) 19 and 20, an OR circuit 21, AND circuits 22 and 23 and a multiplexer 24. The OR circuit 21 receives the read signal READ and a signal output by the DFF 19, and the AND circuit 22 receives a signal output by the OR circuit 21, a logic inverted signal for the write signal WRITE and a logic inverted signal for a reset signal RESET. And the DFF 19 latches a signal output by the AND circuit 22, synchronized with a clock signal CLK. When the read signal READ is at a level H (a logic high) of "1", the multiplexer 24 selects and outputs the signal output by the DFF 19, and when the read signal READ is at a level L (a logic low) of "0", the multiplexer 24 selects and outputs the signal output by the DFF 20. The DFF 20 latches the signal output by the multiplexer 24, synchronized with the clock signal CLK, and outputs this signal as a read data bus signal READ databus. The AND circuit 23 receives the read signal READ and the signal output by the DFF 19, and generates a bus retry signal BUS Retry.

The DFF 19 has a function for holding a main lock LOCK in a locked state "1" or an unlocked state "0". The OR circuit 21 and the AND circuit 22 have a function for setting, to the DFF 19, the main lock variable LOCK in the locked state "1" when the CPU 11 or 12 asserts the read signal READ, and for setting, to the DFF 19, the main variable LOCK in the unlocked state "0" when the CPU 11 or 12 asserts the write signal WRITE. The multiplexer 24 and the DFF 20 have a function for, when the CPU 11 or 12 asserts the read signal READ, outputting the main lock variable LOCK that is held in the DFF 19. The AND circuit 23 has a function that generates the bus retry signal BUS Retry, for supply to the CPUs 11 and 12, when either the CPU 11 or the CPU 12 asserts the read signal READ while the main variable LOCK is in the locked state "1".

In addition, one, or equal to or greater than two sub-lock variables "locks" are stored in the system memory 17. Since a snoop cache is not prepared in either the CPU 11 or the CPU 12, a non-cache area should be designated as a memory area to allocate the sub-lock variables "locks".

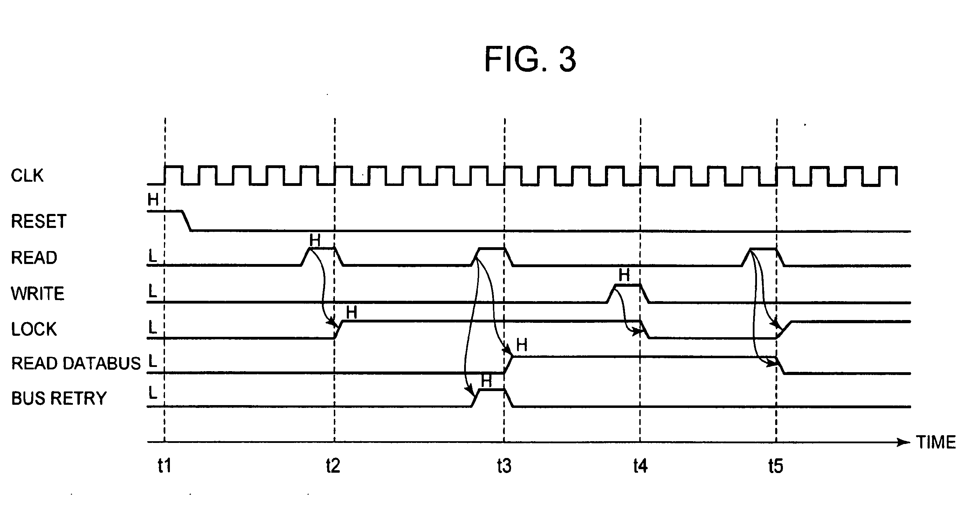

The operation of the lock register 18 will now be described while referring to Fig. 3.

When the reset signal RESET at level H is asserted, the lock register 18 is initialized at time t1, where the clock signal CLK rises. Specifically, regardless of the read signal READ and the write signal WRITE, the AND circuit 22 outputs a signal at level L, and the DFF 19 latches this signal. That is, the DFF 19 holds the main lock variable LOCK in the unlocked state "0".

Then, either the CPU 11 or the CPU 12 asserts the read signal READ at level H in order to confirm that acquisition of a lock is enabled, and the signal output by the AND circuit 22 goes to level H. At time t1, where the clock signal CLK rises, the DFF 19 latches the signal at level H and outputs it. Since the signal output by the DFF 19 is continuously transmitted to the OR circuit 21, the DFF 19 continues the latching of signals at level H after the read signal READ is returned to level L, so that the main lock variable is held in the locked state "1".

When the read signal READ is returned to level L, the multiplexer 24 selects the signal output by the DFF 20, and the DFF 20 continues the latching of the signal at level L, so that the read data bus signal READ databus is maintained at level L. Therefore, either the CPU 11 or the CPU 12 understands that acquisition of a lock is enabled.

Immediately after either the CPU 11 or the CPU 12 has understood that acquisition of a lock is enabled, assume that the other CPU asserts the read signal READ at level H in order to confirm that acquisition of a lock is enabled. In this case, since the signal output by the DFF 19 is already at level H, the AND circuit 23 asserts the bus retry signal BUS Retry at level H. Therefore, the other CPU understands that acquisition of a lock is disabled. Furthermore, since the read signal READ is asserted at level H and the multiplexer 24 selects the signal output by the DFF 19, the DFF 20 latches a signal of level H at time t3, where the clock signal CLK rises, so that the read databus signal READ databus is asserted at level H.

Thereafter, when either the CPU 11 or the CPU 12 asserts a write signal WRITE at level H in order to release the lock, the signal output by the AND circuit 22 goes to level L. The DFF 19 latches the signal at level L and outputs this signal at time t4, where the clock signal CLK rises. As a result, the main lock variable LOCK is cleared to the unlocked state "0".

Subsequently, when either the CPU 11 or the CPU 12 again asserts the read signal READ of level H to confirm that acquisition of a lock is enabled, at time t5, where the clock signal CLK rises, the DFF 19 latches the signal at level H and outputs this signal in the same manner. At this time, since the multiplexer 24 selects the signal at level L, the DFF latches and outputs this signal. Therefore, the read data bus signal READ databus is returned to level L and either the CPU 11 or the CPU 12 understands that acquisition of a lock is enabled.

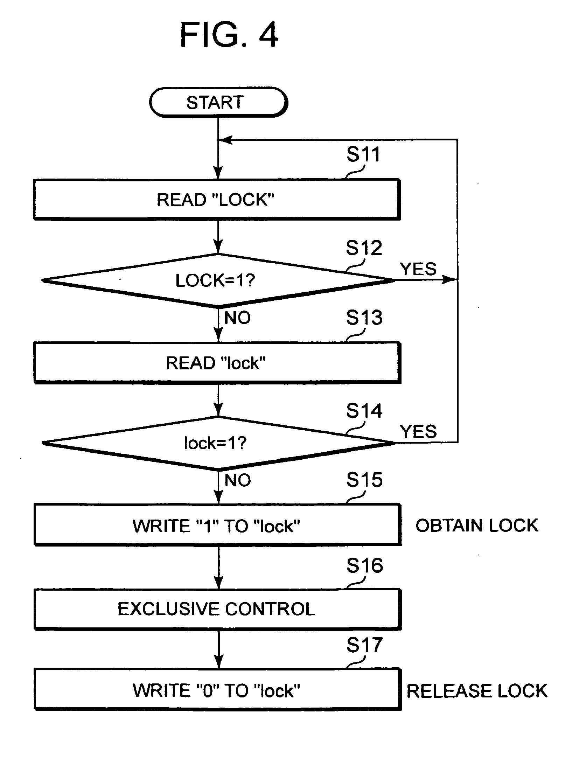

The operation of the entire multiprocessor system 10 employing the lock register 18 will now be described while referring to Fig. 4.

Either the CPU 11 or the CPU 12 reads the main lock variable LOCK from the lock register 18 (S11) and determines whether or not LOCK = 1, i.e., whether the main lock variable LOCK is in the locked state "1" (S12). When the main lock variable LOCK is in the unlocked state "0" (NO at S12), either the CPU 11 or the CPU 12 reads the sub-lock variable "lock" from the system memory 17 (S13) and determines whether or not lock = 1, i.e., whether the sub-lock variable "lock" is in the locked state "1" (S14). When the sub-lock variable "lock" is in the unlocked state "0" (NO at S14), the CPU 11, or the CPU 12, writes "1" to the sub-lock variable "lock" and obtains a lock (S15). After obtaining a lock, the CPU 11, or the CPU 12, exercises predetermined exclusive control (S16). Once the exercise of exclusive control is no longer required, the CPU 11, or the CPU 12, writes "0" to the sub-lock variable "lock" and releases the lock (S17).

As described above, according to the embodiment, when either the CPU 11 or the CPU 12 asserts a read signal READ, the main lock variable LOCK is read from the lock register 18, and immediately, the main lock variable LOCK in the locked state "1" is written to the lock register 18. Thus, when the other CPU 12, or the CPU 11, asserts a read signal READ immediately thereafter, the main lock variable LOCK, in the locked state "1", is read from the lock register 18, and the CPU can not obtain a lock. Therefore, a function for a lock variable can be provided, simply by preparing the lock register 18, that is the equivalent of an atomic read-modify-write function included in an expensive multi-processor system.

Furthermore, when either the CPU 11 or the CPU 12 asserts the read signal READ while the main lock variable LOCK is in the locked state "1", the bus retry signal BUS Retry is generated, and the CPU 12, or the CPU 11, that receives the bus retry signal understands that acquisition of a lock is disabled. Therefore, useless assertion of the read signal READ can be prevented.

Further, according to the embodiment, either the CPU 11 or the CPU 12 accesses the lock register 18 via the special cross-bar bus 16 to obtain or release a lock. Therefore, when the CPU 11, or the CPU 12, has obtained the lock, the other CPU 12, or the CPU 11, is waiting for the release of the lock, and the waiting CPU 12, or the CPU 11, asserts the read signal READ via the cross-bar bus 16 and reads the main lock variable LOCK from the lock register, and the CPU 11, or the CPU 12, that obtains the lock accesses the system 17 via the cross-bar bus 15. With this arrangement, the accessing of the system memory 17 by the CPU 11, or the CPU 12, that obtains the lock is not interrupted.

In addition, in this embodiment, one, or equal to or greater than two sub-lock variables "locks" are stored in the system memory 17. The CPU 11, or the CPU 12, obtains a lock step by step, e.g., first reads the main lock variable LOCK from the lock register 18 to obtain a lock, and then reads the sub-lock variable "lock" from the system memory 17 to obtain a lock. In this manner, multiple lock variable "locks" can be designated.

The embodiment of the present invention has been described; however, this embodiment is merely an example for carrying out the present invention. Therefore, the present invention is not limited to this embodiment, and can be provided by appropriately modifying the embodiment without departing from the subject of the present invention as disclosed by the appended claims.

## Claims

1. A multiprocessor system, comprising:
a plurality of processors (11, 12) for asserting a read signal for obtaining a lock before executing an exclusive control with respect to system memory (17) and for asserting a write signal to release the lock after executing the exclusive control; and
a lock register (18) connected to the plurality of processors, said lock register further including logic circuitry for implementing the following means:
holding means (19) for holding a first lock variable in a locked or unlocked state;
lock variable output means for outputting the first lock variable having been previously held by said holding means if one of said processors asserts the read signal; and
lock variable input means for setting the first lock variable in the locked state to the holding means if one of said processors asserts the read signal or for setting the first lock variable in the unlocked state if one of said processors asserts the write signal;
**characterised by** the system further comprising:
a first bus (15) connected in common to said plurality of processors (11, 12);
a system memory (17) connected to said first bus (15); and
a second bus (16) connected in common to said plurality of processors and the second bus being connected to said lock register (18) for accessing said lock register (18).

2. A multiprocessor system according to claim 1, wherein said lock register further includes:
bus retry means (23) for, if a specified processor of said processors asserts a read signal while the first lock variable is held in the locked state, generating a bus retry signal to be supplied to the processors.

3. A multiprocessor system according to claim 1, further comprising:
a memory for storing one, or equal to or greater than two second lock variables,
wherein each of said processors asserts the read signal, reads the first lock variable from said lock register, reads the second lock variable from said memory if the first lock variable is in the unlocked state, and rewrites the second lock variable to the locked state if the second lock variable is in the unlocked state.

## Patentansprüche

1. Multiprozessorsystem, das Folgendes umfasst:
eine Vielzahl von Prozessoren (11, 12) zum Aktivieren eines Lesesignals zum Erhalten einer Sperre vor der Ausführung einer ausschließenden Steuerung in Bezug auf den Systemspeicher (17) und zum Aktivieren eines Schreibsignals zum Freigeben der Sperre nach der Ausführung der ausschließenden Steuerung; und
ein mit der Vielzahl von Prozessoren verbundenes Sperrregister (18), wobei das Sperrregister außerdem eine Logikschaltung zum Realisieren der folgenden Mittel beinhaltet:
ein Zwischenspeichermittel (19) zum Zwischenspeichern einer ersten Sperrvariablen (lock variable) in einem gesperrten oder offenen Zustand;
ein Sperrvariablen-Ausgabemittel zum Ausgeben der ersten Sperrvariablen, die zuvor vom Zwischenspeichermittel zwischengespeichert wurde, wenn einer der Prozessoren das Lesesignal aktiviert; und
ein Sperrvariablen-Eingabemittel zum Setzen der ersten Sperrvariablen im Zwischenspeichermittel in den gesperrten Zustand, wenn einer der Prozessoren das Lesesignal aktiviert oder zum Setzen der ersten Sperrvariablen in den offenen Zustand, wenn einer der Prozessoren das Schreibsignal aktiviert;
**dadurch gekennzeichnet, dass** das System außerdem Folgendes umfasst:
einen mit der Vielzahl von Prozessoren (11, 12) verbundenen ersten Bus (15);
einen mit dem ersten Bus (15) verbundenen Systemspeicher (17); und
einen mit der Vielzahl von Prozessoren verbundenen zweiten Bus (16) und wobei der zweite Bus mit dem Sperrregister (18) verbunden wird, um auf das Sperrregister (18) zuzugreifen.

2. Multiprozessorsystem nach Anspruch 1, wobei das Sperrregister außerdem Folgendes beinhaltet:
ein Buswiederholungsmittel (23) zum Erzeugen eines Buswiederholungssignals, das den Prozessoren zugeführt werden muss, wenn ein angegebener Prozessor der Prozessoren ein Lesesignal aktiviert, wenn die erste Sperrvariable im gesperrten Zustand zwischengespeichert ist.

3. Multiprozessorsystem nach Anspruch 1, das außerdem Folgendes umfasst:
einen Speicher zum Speichern von einer oder zwei oder mehr zweiten Sperrvariablen,
wobei jeder der Prozessoren das Lesesignal aktiviert, die erste Sperrvariable aus dem Sperrregister liest, die zweite Sperrvariable aus dem Speicher liest, wenn sich die erste Sperrvariable im offenen Zustand befindet, und die zweite Sperrvariable in den gesperrten Zustand rückschreibt, wenn sich die zweite Sperrvariable im offenen Zustand befindet.

## Revendications

1. Système multiprocesseur comprenant :
une pluralité de processeurs (11, 12) pour activer un signal de lecture afin d'obtenir un blocage avant d'exécuter un contrôle exclusif par rapport à la mémoire de système (17) et pour activer un signal d'écriture pour libérer le blocage après avoir exécuté le contrôle exclusif ; et
un registre de blocage (18) connecté à la pluralité de processeurs, ledit registre de blocage incluant en outre un circuit logique pour la mise en oeuvre des moyens suivants:
un moyen de maintien (19) pour maintenir une première variable de blocage à un état bloqué ou débloqué ;
un moyen de sortie de variable de blocage pour sortir la première variable de blocage ayant étant retenue auparavant par ledit moyen de blocage si l'un des dits processeurs active le signal de lecture ; et
un moyen d'entrée de variable de blocage pour placer la première variable de blocage à l'état bloqué dudit moyen de maintien si l'un desdits processeurs active le signal de lecture ou pour placer la première variable de blocage à l'état débloqué si l'un desdits processeurs active le signal d'écriture ;
**caractérisé en ce que** le système comprend en outre :
un premier bus (15) connecté en commun à la dite pluralité de processeurs (11, 12) ;
un système de mémoire (17) connecté audit premier bus (15) ; et
un second bus (16) connecté en commun à la dite pluralité de processeurs et le second bus étant connecté audit registre de blocage (18) pour accéder audit registre de blocage (18).

2. Système multiprocesseur selon la revendication 1, dans lequel ledit registre de blocage inclut en outre :
un moyen de relance de bus (23) si un processeur spécifié desdits processeurs active un signal de lecture pendant que la première variable de blocage est maintenue à l'état bloqué, générant un signal de relance destiné aux processeurs.

3. Système multiprocesseur selon la revendication 1, comprenant en outre :
une mémoire pour stocker une, deux ou un nombre supérieur de secondes variables de blocage,
dans lequel chacun desdits processeurs active le signal de lecture, lit la première variable de blocage dudit registre de blocage, lit la seconde variable de blocage de ladite mémoire si la première variable de blocage est à l'état bloqué et réécrit la seconde variable de blocage à l'état bloqué si la seconde variable de blocage est à l'état débloqué.
